# FASCICULE DE BREVET EUROPEEN

(11) **EP 1 538 365 B1**
(45) Date de publication et mention de la délivrance du brevet: **02.08.2006**
(21) Numéro de dépôt: 04292892.9
(22) Date de dépôt: 06.12.2004
(51) Int. Cl.: F16F 7/08

(54) **Dispositif d'absorption d'énergie pour colonne de direction**
Energieabsorptionseinrichtung für eine Lenksäule
Energy absorbing device for a steering column

(30) Priorité: 04.12.2003 FR 0314269
(43) Date de publication de la demande: 08.06.2005
(73) Titulaire: Nacam France SAS, 41100 Vendome (FR)
(72) Inventeur: Fargeas, Denis, 41100 Naveil (FR); Thomas, Robin, 41100 Marcilly-en-Beauce (FR); Calsat, Frédéric, 41290 Oucques (FR)
(74) Mandataire: Breese, Pierre

(56) Documents cités:
- FR-A- 2 161 449
- FR-A- 2 708 689
- US-A- 5 590 565
- US-A- 5 984 354
- US-A1- 2002 088 296
- US-B1- 6 223 619

## Description

La présente invention se rapporte au domaine des systèmes d'absorption d'énergie pour colonnes de direction.

Une colonne de direction pour véhicules doit classiquement pouvoir assurer trois fonctions :
1. transmettre un couple entre le volant et le système de direction pour autoriser la rotation des roues quand le volant est tourné,
2. régler, en hauteur et en profondeur, la position du volant dans le véhicule,
3. se rétracter en absorbant l'énergie du conducteur en cas d'accident.

À l'heure actuelle, on connaît sur le marché des colonnes de direction dans lesquelles sont présents trois dispositifs complexes indépendants pour assurer chacune des trois fonctions ci-dessus. Comme ces trois dispositifs requièrent un ensemble de composants complexes et volumineux, les coûts de fabrication d'une telle colonne de direction sont relativement élevés. Par ailleurs, les impératifs d'encombrements actuels de la colonne de direction obligent à réaliser des colonnes de direction, comportant des systèmes assurant ces trois fonctions, présentant des dimensions les plus réduites possible.

L'art antérieur connaît déjà le brevet US 6234528, déposé au nom de la demanderesse, qui décrit un dispositif d'absorption modulable d'énergie d'une colonne de direction de véhicule automobile.

Ce type de système d'absorption d'énergie fonctionne bien, mais nécessite la réalisation de pièces supplémentaires, en l'occurrence une pluralité de pièces déformables absorbant l'énergie lors de leurs déformations, qui doivent être fixées par l'intermédiaire d'autres éléments à la colonne de direction. Ainsi, ce système d'absorption d'énergie est coûteux. De plus, ce système nécessite la mise en place d'une pluralité de pièces au niveau ou à proximité de la colonne de direction, ceci étant préjudiciable dans la mesure où les gains de place sont essentiels, non seulement pour faciliter leur mise en place mais également pour autoriser le placement d'autres matériels.

La demanderesse a également déposé le brevet FR 2714649 qui décrit un organe d'absorption d'énergie interposé entre deux éléments susceptibles de s'écarter l'un de l'autre sous l'action d'un effort extérieur, ledit organe comportant une première partie s'étendant autour d'un axe-support monté sur le premier élément et une seconde partie rectiligne prolongeant la première partie, ayant une extrémité libre fixée sur le second élément et s'étendant entre les deux éléments en étant orientée sensiblement dans la direction de l'effort, ledit organe étant caractérisé en ce qu'il consiste en un fil enroulé en spires jointives constituant un enroulement, disposé autour de l'axe-support du premier élément, de sorte que la traction exercée sur le fil par l'écartement des deux éléments provoque le déroulement de l'enroulement autour de l'axe-support et ainsi l'absorption de l'énergie demandée.

La présente invention entend remplacer l'organe de fil enroulé en spires jointives par un dispositif plus simple et moins coûteux.

On connaît la demande de brevet JP 2001334944 qui a cherché à réduire le nombre de pièces nécessaires à la réalisation d'un dispositif d'absorption d'énergie pour colonne de direction, à la fois efficace et peu coûteux. Dans ce système, la partie d'absorption d'impact comprend un dispositif rotatif monté sur un des éléments de la colonne de direction, un corps apte à tourner autour de l'axe horizontal entre l'élément de la colonne de direction et le corps du véhicule, un corps linéaire lié au dispositif rotatif et ayant ses deux extrémités fixées au dispositif rotatif, et un crochet d'engagement fixé de l'autre côté de l'élément de colonne de direction et engagé avec la partie centrale du corps linéaire. Quand un impact a lieu, le crochet d'engagement tire la partie liée au dispositif rotatif du corps linéaire pour déformer plastiquement cette partie du corps linéaire et ensuite entraîner en rotation le dispositif rotatif pour absorber l'énergie d'impact.

On comprend que malgré le souhait de réaliser un dispositif d'absorption d'énergie comprenant peu d'éléments, cette invention reste très complexe et donc coûteuse.

En effet, il est très difficile d'envisager la réalisation d'un dispositif d'absorption d'énergie simple et peu coûteux satisfaisant l'ensemble du cahier des charges exigé par les constructeurs/vendeurs d'autos.

Il a également été proposé dans le brevet JP 3279085 un dispositif d'absorption d'énergie pour colonnes de direction comportant un élément additionnel ainsi que des guides de coulissement fixés sur la colonne de direction. Ce dispositif, comme ceux présentés dans l'art antérieur, est complexe, d'une part dans sa réalisation et sa fixation à la colonne de direction, mais est également encombrant, car il occupe un espace non négligeable.

Un tel dispositif est aussi connu du brevet US 5 590 565, qui contient les caractéristiques du préambule de la revendication 1.

La présente invention entend remédier aux inconvénients de l'art antérieur en proposant un dispositif d'absorption d'énergie utilisant la coulisse de réglage de la colonne de direction, c'est-à-dire que la coulisse de réglage assure ici à la fois le réglage en profondeur de la colonne de direction mais également la fonction d'absorption d'énergie en cas d'accident. Ainsi, lors de la compression de la colonne de direction sous l'effet d'un choc, l'axe volant femelle interfère avec l'axe volant mâle par l'intermédiaire d'un manchon plastique.

Pour ce faire, la présente invention concerne un dispositif d'absorption d'énergie pour colonne de direction de véhicules, tels que par exemple une automobile, comportant une colonne de direction dans laquelle est montée une coulisse de réglage, ladite coulisse de réglage comportant une partie femelle, disposant d'un orifice d'entrée, reliée respectivement soit au volant soit au système de crémaillère, et une partie mâle reliée respectivement soit à un système de crémaillère soit au volant, coulissant l'une dans l'autre notamment lors du réglage en profondeur de la colonne de direction, caractérisé en ce qu'au moins un manchon est fixé sur la partie mâle de manière à absorber de l'énergie en venant en contact au moins partiellement avec le susdit orifice d'entrée de la partie femelle en cas de choc violent, en particulier en cas d'accident.

On entend par « choc violent » toute force amenant la colonne de direction, et donc les parties mâles et femelles de la coulisse de réglage, à se compacter au-delà des possibilités offertes par la fonction de réglage en profondeur de la colonne de direction. On notera que le réglage de la colonne de direction permet un coulissement des pièces de la colonne de direction, notamment des deux parties mâle et femelle de la coulisse de réglage. En cas d'accident, ce coulissement des pièces de la colonne de direction est d'amplitude environ deux fois supérieure à un coulissement en phase de réglage.

On notera par ailleurs que le présent dispositif d'absorption d'énergie s'utilise au niveau des parties, mâle et femelle, de la coulisse de réglage, néanmoins le dispositif selon l'invention pourra également s'installer de la même manière respectivement sur les parties mâle et femelle de la colonne de direction. En effet, on distingue ici les parties mâle et femelle de la coulisse de réglage, faisant parties de la colonne de direction, de la colonne de direction elle-même et qui se compose également d'une partie mâle et d'une partie femelle également reliée au châssis du véhicule et au volant.

Avantageusement, l'extrémité de la partie mâle comprendra une partie cannelée au moins en partie surmoulée par une matière plastique.

Avantageusement, la partie femelle comprendra à son extrémité, une cannelure intérieure circonférentielle ; la section du profil de cette cannelure est inscrite entre deux cercles de diamètres c et d, avec c < d.

De préférence, le diamètre du manchon sera supérieur à c.

Avantageusement, le manchon comprendra une partie ou bague cylindrique de diamètre uniforme.

De préférence, la partie cylindrique du manchon présentera un diamètre sensiblement égal ou supérieur à c.

Avantageusement, la partie cylindrique se prolongera, par une deuxième section cylindrique de diamètre supérieur au diamètre de la précédente partie cylindrique.

Avantageusement, la deuxième section présentera un diamètre supérieur à c.

Selon une possibilité offerte par l'invention, la succession de la partie cylindrique suivie de la deuxième partie cylindrique sera répétée une pluralité de fois sur la longueur du manchon.

De préférence, que le manchon sera en matière plastique, tels que par exemple un polyamide (PA) 4, 6 ou un polyamide 11 ou un polyoxyméthylène.

Selon un mode de réalisation, le manchon et le surmoulage en plastique seront réalisés dans la même matière.

Selon un mode de réalisation, la partie femelle comprendra une partie de rétrécissement dont le diamètre est inférieur au diamètre moyen de ladite partie femelle.

Avantageusement, le diamètre de la partie de rétrécissement décroît sensiblement linéairement.

Le brevet US-B1-6 223 619 décrit une colonne de direction réglable dépourvue de système d'absorption d'énergie.

Grâce au dispositif selon l'invention, on apporte une fonction d'absorption d'énergie sur une colonne de direction à réglage axial sans ajout de composant supplémentaire et à moindre coût (modification ou ajout sur les composants existants). Ce dispositif répond par ailleurs à des contraintes d'encombrement car il n'utilise aucun espace supplémentaire à celui utilisé par la colonne de direction elle-même. Enfin, selon les diverses variantes de réalisation du dispositif selon l'invention, il est possible de produire, d'une manière extrêmement simple, de multiples formes ou possibilités d'absorption d'énergie.

On comprendra mieux l'invention à l'aide de la description, faite ci-après à titre purement explicatif, d'un mode de réalisation de l'invention, en référence aux figures annexées :
- la figure 1 illustre une vue en coupe du manchon selon l'invention dans le cas où l'on souhaite une absorption constante de l'énergie ;
- la figure 2 illustre une vue en coupe du manchon selon l'invention dans le cas où l'on souhaite une absorption croissante de l'énergie ;
- la figure 3 illustre une vue en coupe du manchon selon l'invention dans le cas où l'on souhaite une absorption par étage, ou en plateaux, de l'énergie ;
- la figure 4 illustre une vue en coupe du manchon selon l'invention dans le cas où l'on souhaite une absorption croissante puis décroissante de l'énergie ;
- la figure 5 illustre une vue en coupe de la partie femelle et de la partie mâle de la coulisse de réglage ainsi que du manchon selon l'invention, avant un impact ;
- la figure 6 illustre une vue en coupe des éléments représentés sur la figure 5, après impact ; et
- la figure 7 illustre une vue en coupe d'une variante de réalisation de la partie femelle de la coulisse de réglage apte à absorber également de l'énergie d'impact.

Une colonne de direction, non représentée sur les figures annexées, comprend toujours une coulisse de réglage 1 disposant d'une pièce mâle 2 reliée au système de crémaillère, actionnant une barre de direction des deux roues avant du véhicule, et une pièce femelle 3 reliée au volant. Ces deux pièces, mâle 2 et femelle 3, coulissent l'une dans l'autre et ont pour fonction première d'autoriser le réglage en profondeur de la colonne de direction. En effet, le conducteur dispose près du volant d'une commande, non représentée sur les figures annexées, lui permettant de régler le volant de manière appropriée, essentiellement en fonction de sa taille, afin de se positionner pour une meilleure prise du volant pendant la conduite.

Ainsi, la partie mâle 2 de la coulisse de réglage 1 est apte à coulisser dans la partie femelle 3, de l'ordre d'environ 40 millimètres pour le réglage de la colonne de direction par le conducteur. Les parties mâle 2 et femelle 3 présentent chacune une extrémité cylindrique, le diamètre de l'extrémité de la partie femelle 3 étant, bien entendu, supérieur au diamètre de la partie mâle 2. La partie mâle 2 comprend à son extrémité, proche de la partie femelle 3, une partie cannelée 4 qui est surmoulée par un surmoulage plastique de manière à bien s'intégrer, c'est-à-dire sans jeu ou avec un minimum de jeu, dans la partie femelle 3. Le surmoulage plastique de la partie cannelée n'est pas représenté sur les figures.

La partie femelle 3 comprend à son extrémité une cannelure consistant en une pluralité de dents. Les sommets des dents s'inscrivent bien sûr dans un cercle de diamètre légèrement inférieur au diamètre de cette extrémité de la partie femelle 3. Ces dents forment des protubérances s'étirant vers le centre du cylindre et sont disposées de manière uniformément réparties sur la circonférence du cylindre.

La présente invention cherche à utiliser la coulisse de réglage 1 pour lui conférer également la fonction d'absorption d'énergie en cas de choc violent, c'est-à-dire en cas d'accident. Ceci est rendu possible par l'ajout d'une pièce de dimensions extrêmement réduite, à savoir un manchon 6, sur la partie mâle 2 de la coulisse de réglage 1 ; ledit manchon 6 interférant avec la partie femelle 3 de la coulisse de réglage 1.

Le manchon plastique 6 est fixé sur l'extrémité cylindrique de la partie mâle 2 de sorte que, lorsque la partie mâle 2 coulisse dans la partie femelle 3, les parois cylindriques de la partie femelle 3 viennent en contact avec le manchon 6 et le manchon 6 absorbe en conséquence l'énergie du choc d'un accident transmise à la colonne de direction. Ainsi, les dimensions du manchon 6 sont choisies de manière à permettre que la partie femelle 3, ou au moins une section de cette partie femelle 3, vienne en contact avec le manchon 6 lors de son déplacement au-delà des limites fixées par la coulisse de réglage 1 et destinées à autoriser le coulissement des parties mâle 2 et femelle 3 afin de personnaliser la position du volant au conducteur.

Ainsi, afin d'illustrer l'invention, si l'extrémité cylindrique cannelée de la partie femelle 3 présente un diamètre intérieur de 20 millimètres maximum, alors le manchon 6 présentera un diamètre supérieur ou égal à 20 millimètres ; la longueur du manchon 6 comprise entre 3 et 10 millimètres. Dans ces conditions, le manchon 6 viendra au contact des susdites dents protubérantes formant l'extrémité de la partie femelle 3, de manière à freiner la course de la partie mâle 2 dans la partie femelle 3. On pourra envisager que la cannelure 5 de la partie femelle 3 présente des protubérances de forme spécialement étudiée pour freiner de manière particulière la course de la partie mâle 2 ; la cannelure 5 présentant par exemple des dents dont la hauteur augmente lorsque la partie mâle 2 s'enfonce dans la partie femelle 3 de sorte que la résistance au manchon 6 soit plus importante plus la partie mâle 2 s'enfonce dans la partie femelle 3.

Le manchon 6 selon l'invention est réalisé principalement de deux manières. Il est possible de réaliser le manchon 6 de manière totalement indépendante de la partie mâle 2, c'est-à-dire en préparant par exemple par moulage le manchon 6 puis en le fixant, par exemple par collage, ou clippage (clipsage) sur la partie mâle 2. On pourra également prévoir, selon un mode de réalisation préféré, de surmouler le manchon 6 sur la partie mâle 2, tout comme la susdite partie surmoulée est fixée à l'extrémité 4 de la partie mâle 2. Ainsi, avantageusement, la matière du surmoulage de l'extrémité 4 de la partie mâle 2 sera identique à la matière utilisée pour réaliser le manchon 6.

La forme du manchon 6 est évidemment essentielle pour le but de l'invention, à savoir l'absorption d'énergie et la manière dont on souhaite absorber cette énergie. Ainsi, cette forme va varier selon que l'on souhaite une absorption d'énergie constante, croissante, en plateaux ou croissante/décroissante.

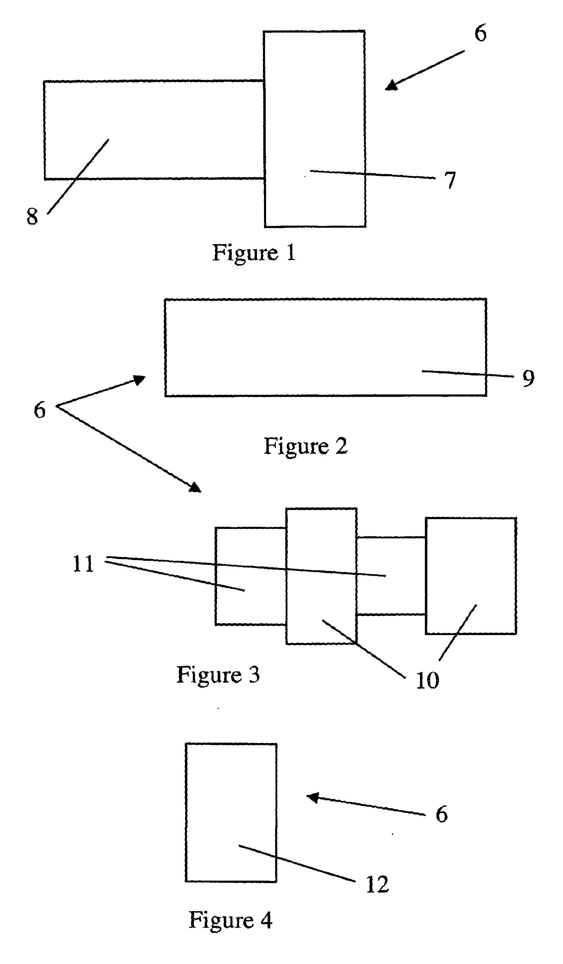

À titre d'exemple, dans le cas d'une partie femelle 3 à cannelure de profil constant, la figure 1 représente le manchon 6 lorsque l'on souhaite réaliser une absorption constante d'énergie. Dans ce cas, le manchon 6 présente une forme de T avec une première section 7 de diamètre supérieur à une deuxième section 8 ; la longueur de la première section 7 étant par contre inférieure à la longueur de la deuxième section 8. La première section 7 permet une absorption d'énergie importante tandis que la deuxième section 8 permet une absorption d'énergie sensiblement uniforme en fonction du déplacement, sur le parcours déterminé par sa longueur.

La figure 2 représente le manchon 6 lorsque l'on souhaite une absorption croissante d'énergie au cours du déplacement. Dans ce cas, le manchon 6 se présente sous la forme d'un cylindre de diamètre constant 9 sur toute sa longueur ; la longueur étant fonction de l'absorption d'énergie désirée car l'absorption d'énergie suit une droite linéaire, en fonction du déplacement, sur le parcours déterminé par la longueur du manchon 6.

La figure 3 représente le manchon 6 lorsque l'on souhaite une absorption en plateaux, ou par étage, d'énergie. Ainsi, dans ce cas, le manchon 6 se présente par la succession de deux sections, la première 10 (c'est-à-dire celle entrant en contact la première avec la partie femelle 3) présentant un diamètre supérieur à la deuxième section 11, les longueurs de chaque section 10, 11 étant dépendante de l'absorption souhaitée pour chaque plateau ainsi que le saut d'énergie (absorbée) d'un plateau au suivant. Ainsi, la courbe d'absorption d'énergie avec un tel manchon 6 se présente comme une succession de plateaux reliés par un saut de plateau, le saut de plateau étant fonction du diamètre et de la longueur de la première section 10 tandis que le plateau est quant à lui fonction de la longueur de la deuxième section 11 (de diamètre inférieur à la première section 10). On pourra évidemment multiplier le nombre de paire de sections 10, 11 autant que désiré par l'absorption d'énergie à réaliser.

Enfin, la figure 4 représente un manchon 6 lorsque l'on souhaite une absorption d'énergie croissante puis décroissante. Dans ce cas, le manchon 6 se présente de diamètre uniforme et de longueur relativement faible. La phase croissante est fonction de la longueur du manchon 6 et son intensité est fonction du diamètre du manchon 6.

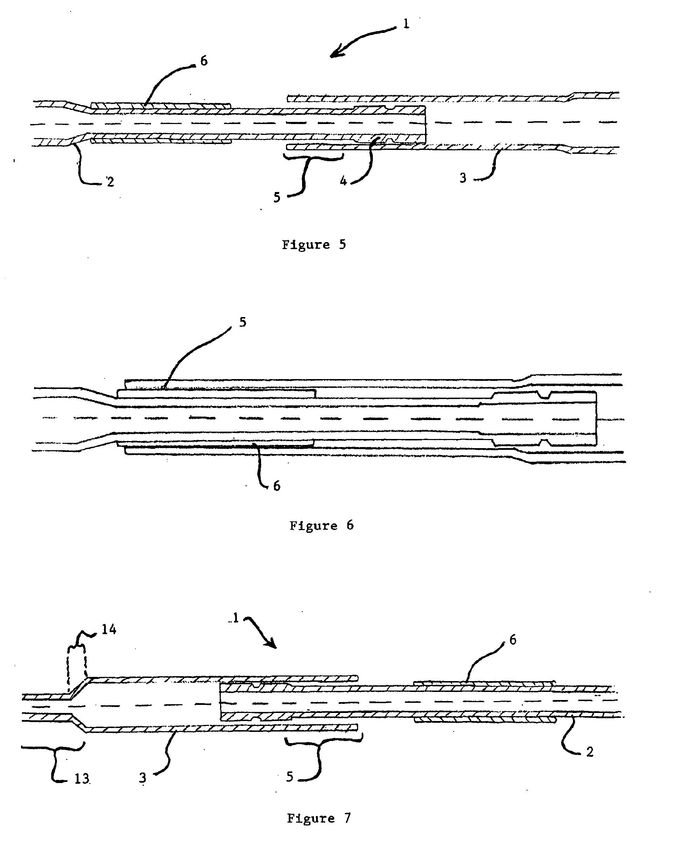

La figure 7 représente une possibilité de réalisation de la partie femelle 3 de la coulisse de réglage 1. Dans ce mode de réalisation, la partie femelle 3 présente au moins une section 13 de diamètre inférieure consistant en un rétrécissement 14 par exemple constant du diamètre. Ainsi, non seulement le manchon 6 absorbe de l'énergie mais également la partie femelle 3 elle-même, le diamètre de cette section 13, 14 étant inférieur à celui de la partie mâle 2.

On notera que la section 13, 14 de diamètre inférieur à celui de la partie mâle 2 est utilisé ici en combinaison avec le manchon 6, mais on pourra prévoir que cette section 13, 14 assure seule la fonction d'absorption d'énergie. Par ailleurs, la partie femelle 3 pourra prévoir une pluralité de section 13, 14 de diamètre inférieur au diamètre de la partie mâle 2 consistant par exemple en des protubérances en V s'étendant vers le centre du cylindre formé par la partie femelle 3. On notera que cette ou ces sections peu(ven)t être obtenue(s) par diverses techniques dont l'emboutissage, ou le formage, à froid ou à chaud, de la partie femelle 3.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif d'absorption d'énergie pour colonne de direction de véhicules comportant une colonne de direction dans laquelle est montée une coulisse de réglage en profondeur de la colonne de direction (1), ladite coulisse de réglage (1) comportant une partie femelle (3), disposant d'un orifice d'entrée, reliée respectivement soit au volant soit au système de crémaillère, et une partie mâle (2) reliée respectivement soit à un système de crémaillère soit au volant, coulissant l'une dans l'autre **caractérisé en ce qu'**au moins un manchon (6) est fixé sur la partie mâle (2) de manière à absorber de l'énergie en venant en contact au moins partiellement avec le susdit orifice d'entrée de la partie femelle (3) en cas de choc violent.

2. Dispositif d'absorption d'énergie selon la revendication 1, **caractérisé en ce que** l'extrémité de la partie mâle (2) comprend une partie cannelée (4) au moins en partie surmoulée par une matière plastique.

3. Dispositif d'absorption d'énergie selon la revendication 1 ou la revendication 2, **caractérisé en ce que** la partie femelle (3) comprend à son extrémité, une cannelure (5) intérieure circonférentielle ; la section du profil de cette cannelure est inscrite entre deux cercles de diamètres c et d, avec c < d.

4. Dispositif d'absorption d'énergie selon l'une quelconque des revendications 1 à 3, **caractérisé en ce que** le manchon (6) comprend une partie (8 ou 9), ou bague (12), cylindrique de diamètre uniforme.

5. Dispositif d'absorption d'énergie selon la revendication 4, **caractérisé en ce que** la partie cylindrique (8) du manchon (6) présente un diamètre sensiblement égal ou supérieur à c.

6. Dispositif d'absorption d'énergie selon la revendication 4, **caractérisé en ce que** la partie cylindrique (8 ou 11) se prolonge, par une deuxième section (7 ou 10) cylindrique de diamètre supérieur au diamètre de la partie cylindrique (8).

7. Dispositif d'absorption d'énergie selon la revendication 6, **caractérisé en ce que** la deuxième section (7) présente un diamètre supérieur à c.

8. Dispositif d'absorption d'énergie selon la revendication 6, **caractérisé en ce que** la succession de la partie cylindrique (11) suivie de la deuxième partie cylindrique (10) est répétée une pluralité de fois sur la longueur du manchon (6).

9. Dispositif d'absorption d'énergie selon l'une quelconque des revendications précédentes, **caractérisé en ce que** le manchon (6) est en matière plastique, tels que par exemple un polyamide (PA) 4, 6 ou un polyamide 11 ou un polyoxyméthylène.

10. Dispositif d'absorption d'énergie selon l'une des revendications 2 à 9, **caractérisé en ce que** le manchon (6) et le surmoulage en plastique sont réalisés dans la même matière.

11. Dispositif -d'absorption d'énergie selon l'une quelconque des revendications précédentes, **caractérisé en ce que** la partie femelle (3) comprend une partie de rétrécissement (13, 14) dont le diamètre est inférieur au diamètre moyen de ladite partie femelle.

12. Dispositif d'absorption d'énergie selon la revendication 11, **caractérisé en ce que** le diamètre de la partie de rétrécissement (14) décroît sensiblement linéairement.

## Claims

1. An energy absorption device for a vehicle steering column, comprising a steering column in which there is mounted a slide (1) for adjusting the depth of the steering column, the said adjustment slide (1) comprising a female part (3), having an inlet orifice, connected respectively either to the steering wheel or to the rack system, and a male part (2) connected respectively either to a rack system or to the steering wheel, sliding in each other, **characterised in that** at least one sleeve (6) is fixed to the male part (2) so as to absorb energy, coming into contact at least partially with the above mentioned inlet orifice of the female part (3) in the case of violent impact.

2. An energy absorption device according to claim 1, **characterised in that** the end of the male part (2) comprises a grooved part (4) at least partly insert-moulded by means of a plastics material.

3. An energy absorption device according to claim 1 or claim 2, **characterised in that** the female part (3) comprises a circumferential internal groove (5); the cross-section of the profile of this groove is inscribed between two circles of diameters c and d, with c < d.

4. An energy absorption device according to any one of claims 1 to 3, **characterised in that** the sleeve (6) comprises a cylindrical part (8 or 9) or ring (12) of uniform diameter.

5. An energy absorption device according to claim 4, **characterised in that** the cylindrical part (8) of the sleeve (6) has a diameter substantially equal to or greater than c.

6. An energy absorption device according to claim 4, **characterised in that** the cylindrical part (8 or 11) is extended by a second cylindrical section (7 or 10) with a diameter greater than the diameter of the cylindrical part (8).

7. An energy absorption device according to claim 6, **characterised in that** the second section (7) has a diameter greater than c.

8. An energy absorption device according to claim 6, **characterised in that** the succession of the cylindrical part (11) followed by the second cylindrical part (10) is repeated a plurality of times over the length of the sleeve (6).

9. An energy absorption device according to any one of the preceding claims, **characterised in that** the sleeve (6) is made from plastics material, such as for example a polyamide 4,6 (PA) or a polyamide 11 or a polyoxymethylene.

10. An energy absorption device according to one of claims 2 to 9, **characterised in that** the sleeve (6) and the plastic insert moulding are produced from the same material.

11. An energy absorption device according to any one of the preceding claims, **characterised in that** the female part (3) comprises a narrowed part (13, 14) whose diameter is less than the mean diameter of the said female part.

12. An energy absorption device according to claim 11, **characterised in that** the diameter of the narrowed part (14) decreases substantially linearly.

## Patentansprüche

1. Vorrichtung zur Energieaufnahme für Lenksäule von Fahrzeugen, die eine Lenksäule umfaßt, in der eine Regelkulisse (1) in der Tiefe der Lenksäule montiert ist, wobei die besagte Regelkulisse (1) ein Aufnahmeteil (3) umfaßt, das über eine Eingangsöffnung verfügt, das entweder mit dem Lenkrad beziehungsweise mit dem Zahnstangensystem verbunden wird, und ein Einsteckteil (2), das entweder mit einem Zahnstangensystem beziehungsweise mit dem Lenkrad verbunden wird, die ineinandergleiten, **dadurch gekennzeichnet, daß** mindestens eine Muffe (6) auf dem Einsteckteil (2) befestigt ist, damit Energie aufgenommen wird, wenn sie bei starkem Aufprall mindestens teilweise in Kontakt mit der besagten Eingangsöffnung des Aufnahmeteils (3) gerät.

2. Vorrichtung zur Energieaufnahme nach Anspruch 1, **dadurch gekennzeichnet, daß** das Ende des Einsteckteils (2) ein gerilltes Teil (4) umfaßt, das zumindest teilweise mit einem Kunststoff ausgegossen ist.

3. Vorrichtung zur Energieaufnahme nach Anspruch 1 oder Anspruch 2, **dadurch gekennzeichnet, daß** das Aufnahmeteil (3) an seinem Ende eine innere Umfangsrille (5) umfaßt; der Querschnitt des Profils dieser Rille ist zwischen zwei Kreisen mit den Durchmessern c und d angegeben, wobei c < d ist.

4. Vorrichtung zur Energieaufnahme nach einem beliebigen der Ansprüche 1 bis 3, **dadurch gekennzeichnet, daß** die Muffe (6) ein zylinderförmiges Teil (8 oder 9), oder Ring (12), mit gleichmäßigem Durchmesser umfaßt.

5. Vorrichtung zur Energieaufnahme nach Anspruch 4, **dadurch gekennzeichnet, daß** das zylinderförmige Teil (8) der Muffe (6) einen Durchmesser aufweist, der etwa gleich oder größer als c ist.

6. Vorrichtung zur Energieaufnahme nach Anspruch 4, **dadurch gekennzeichnet, daß** das zylinderförmige Teil (8 oder 11) durch einen zweiten zylinderförmigen Abschnitt (7 oder 10) mit einem größeren Durchmesser als dem Durchmesser des zylinderförmigen Teils (8) verlängert wird.

7. Vorrichtung zur Energieaufnahme nach Anspruch 6, **dadurch gekennzeichnet, daß** der zweite Abschnitt (7) einen Durchmesser aufweist, der grösser als c ist.

8. Vorrichtung zur Energieaufnahme nach Anspruch 6, **dadurch gekennzeichnet, daß** die Aufeinanderfolge des zylinderförmigen Teils (11) mit nachfolgendem zweitem zylinderförmigem Teil (10) über die Länge der Muffe (6) mehrmals wiederholt wird.

9. Vorrichtung zur Energieaufnahme nach einem beliebigen der vorstehenden Ansprüche, **dadurch gekennzeichnet, daß** die Muffe (6) aus Kunststoff besteht, wie zum Beispiel ein Polyamid (PA) 4, 6 oder ein Polyamid 11 oder ein Polyformaldehyd.

10. Vorrichtung zur Energieaufnahme nach einem beliebigen der Ansprüche 2 bis 9, **dadurch gekennzeichnet, daß** die Muffe (6) und der Ausguß aus Kunststoff aus dem gleichen Material ausgeführt werden.

11. Vorrichtung zur Energieaufnahme nach einem beliebigen der vorstehenden Ansprüche, **dadurch gekennzeichnet, daß** das Aufnahmeteil (3) ein sich verjüngendes Teil (13, 14) umfaßt, dessen Durchmesser unter dem durchschnittlichen Durchmesser des besagten Aufnahmeteils steht.

12. Vorrichtung zur Energieaufnahme nach Anspruch 11, **dadurch gekennzeichnet, daß** der Durchmesser des sich verjüngenden Teils (14) sich deutlich linear verkleinert.
